(19) Europäisches Patentamt
European Patent Office
Office européen des brevets

(11) **EP 1 890 485 B1**

(12) **FASCICULE DE BREVET EUROPEEN**

(45) Date de publication et mention de la délivrance du brevet:
**09.11.2011 Bulletin 2011/45**

(51) Int Cl.:
***H04N 5/33*** *(2006.01)*  ***H04N 7/18*** *(2006.01)*

(21) Numéro de dépôt: **07356097.1**

(22) Date de dépôt: **23.07.2007**

(54) **Détecteur de rayonnement infrarouge et dispositif d'aide à la conduite ou au pilotage comprenant un tel dispositif**

Infrarotsensor und Vorrichtung zur Unterstützung des Fahrens oder Lenkens, die eine solche Vorrichtung umfasst

Infrared radiation detector and driving or piloting assistance device comprising such a device

(84) Etats contractants désignés:
**DE FR GB IT SE**

(30) Priorité: **14.08.2006 FR 0653370**

(43) Date de publication de la demande:
**20.02.2008 Bulletin 2008/08**

(73) Titulaire: **ULIS**
**38113 Veurey Voroize (FR)**

(72) Inventeur: **Tissot, Jean-Luc**
**38120 Saint Egrève (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**FR-A1- 2 732 849**

• **WOOD R A: "LOW-COST INFRARED IMAGERS" SCIENTIFIC HONEYWELLER, HONEYWELL'S CORPORATE. MINNEAPOLIS, US, 1996, pages 109-116, XP000678076 ISSN: 0196-8440**

EP 1 890 485 B1

**Description**

**DOMAINE DE L'INVENTION**

La présente invention concerne un détecteur de rayonnement infrarouge, comprenant un ensemble de capteurs élémentaires différenciés. Par ailleurs, la présente invention concerne un dispositif d'aide à la conduite ou au pilotage de véhicules terrestres, aériens ou maritimes comprenant une caméra infrarouge équipée d'un détecteur conforme à la présente invention.

La présente invention se rapporte donc au domaine de la détection de rayonnement infrarouge, en particulier ceux émis par des entités présentes dans le champ de vision du conducteur ou du pilote d'un tel véhicule.

Pour cette application en effet, il est désormais admis qu'un dispositif d'imagerie thermique procure des informations essentielles pour assister le conducteur du véhicule dans la détection d'obstacles ou d'entités telles que les piétons, les cyclistes ou les véhicules rencontrés dans le cas d'une application automobile, que ces objets à imager soient mobiles ou immobiles.

**ETAT ANTERIEUR DE LA TECHNIQUE**

Pour aider à la conduite de véhicules, des dispositifs ont été développés, dans le cadre de réalisations industrielles, pour équiper des véhicules automobiles avec des caméras infrarouges aptes à la détection des objets mentionnées ci-dessus. Ces dispositifs d'aide à la conduite comprennent des caméras infrarouges équipées de détecteurs non refroidis pour infrarouges thermiques.

En effet, les détecteurs non refroidis permettent de produire des plans focaux dont le coût et l'encombrement conviennent à une application commerciale de grand volume, comme c'est le cas des équipements automobiles. Au contraire, les détecteurs à infrarouges refroidis sont trop onéreux et/ou trop encombrants et/ou insuffisamment fiables pour produire rationnellement des plans focaux pour caméras infrarouges embarquées sur des véhicules de grande série.

Les dispositifs d'aide à la conduite de véhicules proposés dans l'art antérieur comprennent un détecteur de rayonnements infrarouges fonctionnant donc sans refroidissement et constitué d'une matrice de capteurs microbolométriques qui présentent tous la même constante de temps thermique. Cette constante de temps thermique est fixée typiquement entre 5 ms et 30 ms. Ainsi, les capteurs microbolométriques composant un détecteur de rayonnement infrarouge de l'art antérieur sont tous identiques entre eux en termes de structures comme en termes de performances.

Dans la cadre de l'imagerie dynamique, les performances prépondérantes des capteurs microbolométriques sont essentiellement constitués par la sensibilité aux rayons infrarouges à détecter et la rapidité, c'est-à-dire le temps de réponse, pour convertir le rayonnement incident. Or, ces deux performances, rapidité et sensibilité, sont relativement antinomiques. En effet, de manière connue, plus un capteur bolométrique est sensible, moins il est rapide et réciproquement. Il en est évidemment de même pour un détecteur de rayonnements infrarouges comprenant un ensemble de capteurs élémentaires microbolométriques.

Par conséquent, les détecteurs à infrarouge de l'art antérieur ont été conçus pour répondre à un compromis entre ces deux performances, de manière à produire des images relativement nettes et de manière suffisamment rapide.

Toutefois, ce compromis ne s'avère pas satisfaisant pour procurer une aide à la conduite réellement efficace. En effet, même lorsque la fréquence de lecture de la matrice d'un capteur microbolométrique est relativement élevée, on peut observer que le déplacement d'un véhicule produit un effet de filé sur les images que réalise le détecteur à infrarouges embarqué sur ce véhicule. L'expression « effet de filé » désigne communément le flou ou la trace d'un objet dans l'image.

On a constaté que l'« effet de filé » est d'autant plus marqué que l'objet émetteur se trouve éloigné de l'axe de visée du champ de détection de la caméra infrarouge embarquée. Généralement, cet axe de visée est parallèle au sens de marche avant du véhicule et il coïncide avec l'axe de visée du champ de vision du conducteur du véhicule.

Par conséquent, les objets situés sur les bords du champ de détection de la caméra infrarouge sont plus flous que ceux qui se trouvent au centre de ce champ de détection, c'est-à-dire près de l'axe de visée de la caméra. De plus, l'effet de filé est d'autant plus marqué que la vitesse de déplacement du véhicule est grande.

Or, cet effet de filé est principalement dû à un manque de rapidité des capteurs élémentaires recevant les rayons incidents, c'est-à-dire à un temps de réponse trop long de leur part. En effet, en présence de capteurs élémentaires trop lents, l'image d'un objet « s'étale » sur une partie du plan focal, car la prise de vue nécessite une durée d'autant plus longue que les capteurs élémentaires sont lents, si bien que plusieurs capteurs adjacents reçoivent successivement des rayons infrarouges émis par un même point de l'objet.

Le flou de l'image produit par l'effet de filé s'avère particulièrement gênant lorsque le dispositif d'aide à la conduite du véhicule inclut un système de traitement automatique des images destiné à identifier et à classifier les objets détectés. En effet, lorsque l'image de l'objet est trop floue, de tels systèmes de traitement automatiques des images sont mis en échec.

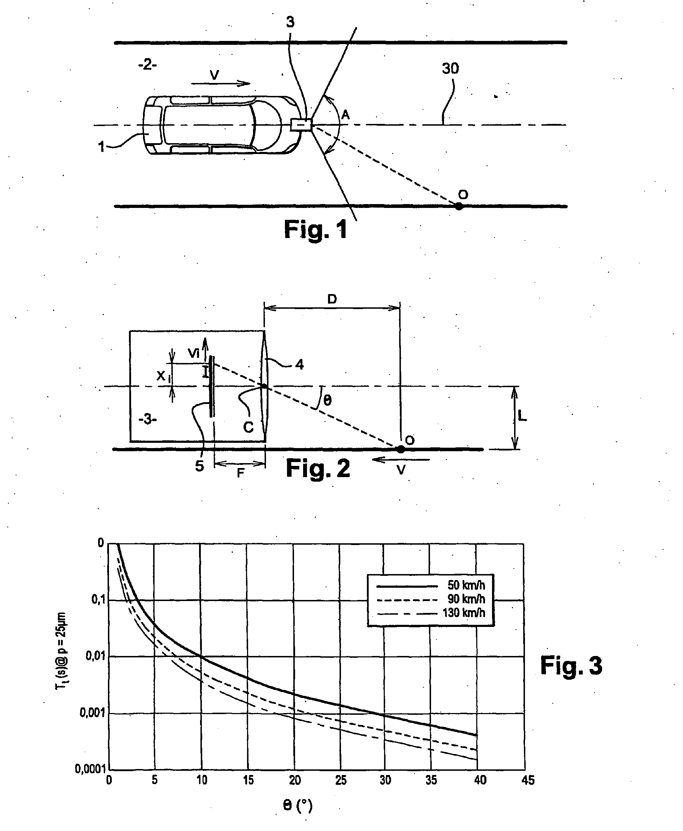

Les figures 1 et 2 illustrent les paramètres intervenant dans l'effet de filé, dont la mise en équation est développée ci-après, de manière à quantifier l'effet de filé.

La figure 1 représente un véhicule **1** roulant à la vitesse **V** sur une route **2**. Le véhicule **1** est équipé d'une caméra infrarouge **3** caractérisée par un angle de vue **A**. L'angle de vue **A**, qui correspond en fait à un angle solide, délimite donc le champ de détection de la caméra infrarouge **3**.

Dans ce champ de détection, on trouve un objet **O** situé sur le bord de la route **2**, par exemple un piéton. Les rayons infrarouges émis par ce piéton en direction de la caméra infrarouge **3** forment un angle θ avec l'axe de visée **30** de la caméra infrarouge **3**. Plus précisément, comme le montre la figure 2, l'angle θ est formé entre l'axe de visée de la caméra infrarouge **3** et la direction sous laquelle le centre optique **C** de l'objectif **4** de la caméra infrarouge **3** voit l'objet **O**. Cet angle θ représente l'angle de vue du point **O** par la caméra infrarouge **3**.

Compte tenu de sa position sur le bord de la route **2**, l'objet **O** se trouve donc à une distance **L** de l'axe de visée **30** de la caméra infrarouge **3**, et à une distance **D** du plan de l'objectif **4**.

En considérant que les objets à visualiser se trouvent à l'infini, le plan focal **5**, composé d'une matrice de capteurs élémentaires microbolométriques, se trouve par définition à la distance focale **F** du plan de l'objectif **4** de la caméra infrarouge **3**.

En considérant que l'objet **O** est immobile et que le véhicule **1** se déplace à la vitesse **V** dans le référentiel terrestre, alors l'objet **O** se déplace à la vitesse **-V** par rapport à la caméra infrarouge **3** dans un référentiel lié au véhicule **1**. De plus, si l'on note **x_i** l'abscisse du point **I** image du point **O** dans le plan focal **5** de la caméra **3**, on conçoit aisément que le point **I** se déplace dans le plan focal **5** avec une vitesse **V_i** au fur et à mesure de la progression du véhicule **1**. Compte tenu des paramètres du mouvement illustré par les figures 1 et 2, on peut écrire (avec δ symbole de dérivation) :

$$V_i = \delta X_i/\delta t \text{ (par définition) ;} \qquad\qquad [\text{I}]$$

$$X_i = L.F/D \text{ (d'après Thalès) ;} \qquad\qquad [\text{II}]$$

Ainsi si l'on introduit l'équation [II] dans l'équation [I], on obtient :

$$V_i = \delta(L.F/D)/\delta t, \text{ c'est-à-dire en dérivant, D seul dépendant du temps t :} \qquad [\text{III}]$$

$$V_i = -(L.F/D^2).\delta D/\delta t \text{ ;} \qquad\qquad [\text{IV}]$$

$$\text{Or, comme } V = \delta D/\delta t \text{ (par définition) et} \qquad\qquad [\text{V}]$$

$$\tan \theta = L/D \text{ (par définition),} \qquad\qquad [\text{VI}]$$

en insérant les équations [V] et [VI] dans l'équation [IV], on conclut alors que :

$$V_i = (V.F/L).\tan^2 \theta. \qquad\qquad [\text{VII}]$$

L'équation [VII] montre bien que l'effet de filé, c'est-à-dire le flou de l'image, représenté par la vitesse de défilement **V_i** est d'autant plus grand que la vitesse **V** est grande ou que l'angle θ est grand, c'est-à-dire que l'objet **O** est proche des bords du champ de détection **A** de la caméra **3**.

En d'autres termes, comme l'effet de filé est lié au temps de latence ou temps de transit d'un point de l'image optique sur un pixel de dimension **p** de l'imageur, ce temps de transit **T_t**, qui vaut **p/V_i**, est donc d'autant plus grand que l'angle θ ou la vitesse **V** sont grands.

Or, la netteté d'une image est d'autant plus grande que le temps de transit **T_t** est court. Par conséquent, pour évaluer la netteté d'une image réalisée par un détecteur à infrarouge, on peut comparer le temps de transit **T_t** à la

constante de temps thermique $\tau_{th}$ caractéristique d'un capteur élémentaire de ce détecteur. La constante de temps $\tau_{th}$ est représentative du temps de réponse du capteur élémentaire, c'est-à-dire de la durée d'acquisition du rayon infrarouge incident.

La figure 3 donne un exemple d'évolution du temps de transit $\underline{T_t}$ en fonction de l'angle θ et pour trois vitesses $\underline{V}$ différentes, 50 km/h, 90 km/h et 130 km/h. On peut observer sur les courbes de la figure 3 que le temps de transit $\underline{T_t}$ augmente rapidement lorsque l'angle θ devient inférieur à 15°.

Ces courbes sont données à titre d'exemple pour une matrice de pixels présentant chacun 25 μm de coté et pour des objets $\underline{O}$ situés à une distance $\underline{L}$ de 5 m de l'axe de visée de la caméra infrarouge **3.** Or, étant donné que l'intensité du signal détecté par le détecteur vaut :

$$S(t)=S_{inf}.(1-exp(-t/\tau_{th})),$$

où :

t représente le temps et

$S_{inf}$ représente le signal obtenu pour une intégration de durée infinie.

Ainsi par exemple, si le temps de transit $\underline{T_t}$ vaut $\tau_{th}$, le signal effectivement reçu ne représente que 63% du signal qui serait reçu par le même capteur et émis par un objet immobile. Compte tenu de cette proportion de 63%, on considère généralement qu'un temps de transit $\underline{T_t}$ valant la constante de temps thermique $\tau_{th}$ constitue un minimum pour obtenir une sensibilité de détection suffisante.

Or, pour les détecteurs thermique à infrarouge dont la constante de temps vaut 17 ms, dont le pas de pixel $\underline{p}$ vaut 25 μm et dont la résolution thermique NetD (de l'expression anglo-saxonne « *Noise Equivalent Temperature Difference* ») vaut 35 mK sur un objet immobile, l'effet de flou et la perte de sensibilité deviennent perturbants pour un angle de vue θ valant 5° lorsque le véhicule se déplace à 130 km/h.

En pratique, l'angle θ étant très faible, la majeure partie des objets représentés à l'image sont flous voire très flous. Par conséquent, l'aide à la conduite procurée par les dispositifs de l'art antérieur s'avère insuffisante voire perturbatrice, ce qui rend inefficace le détecteur à infrarouges embarqué.

La présente invention à donc pour objectif de réaliser un détecteur de rayonnement infrarouge ne présentant pas un effet de filé trop important sur les bords du champ de vision, tout en offrant une sensibilité suffisante pour permettre l'identification automatique des objets rencontrés.

## EXPOSE DE L'INVENTION

La présente invention concerne un détecteur de rayonnement infrarouge permettant une détection rapide sur les bords du champ de vision et sensible au centre de ce champ de vision.

La présente invention concerne un détecteur de rayonnements infrarouges comprenant un ensemble de capteurs élémentaires aptes à détecter ces rayonnements. Selon l'invention, cet ensemble comporte au moins deux zones de détection distinctes, une première zone de détection étant composée de capteurs élémentaires présentant une première constante de temps thermique, et une seconde zone de détection, composée de capteurs élémentaires présentant une seconde constante de temps thermique, différente de cette première constante de temps thermique.

En d'autres termes, le détecteur de rayonnements infrarouges comprend au moins un groupe de capteurs élémentaires « rapides » et au moins un groupe de capteurs élémentaires « sensibles ». Ainsi, le détecteur objet de l'invention peut réaliser une image relativement nette quelle que soit la position de l'objet dans son champ de détection tout en étant très sensible.

En pratique, la première zone de détection occupe le centre de cet ensemble, tandis que la seconde zone de détection occupe la périphérie de l'ensemble, la seconde zone de détection étant composée de capteurs élémentaires présentant une constante de temps thermique inférieure à celle des capteurs élémentaires composant la première zone de détection.

Ce positionnement des deux zones de détection distinctes permet, pour une application automobile, de limiter le flou produit par des objets situés en bord de champ de détection, tout en réalisant une image bien nette des objets situés loin du véhicule, donc au centre du champ de détection.

Selon une forme de réalisation pratique de l'invention, l'ensemble de capteurs élémentaires peut être en forme de matrice rectangulaire.

Ainsi, l'image du champ de détection peut être représentée sur un écran rectangulaire, forme à laquelle tout conducteur est habitué.

Selon un mode de réalisation de l'invention, le détecteur peut comporter cinq zones de détection distinctes et deux à deux juxtaposées, à savoir une zone centrale, une zone périphérique gauche, une zone périphérique droite, une zone périphérique supérieure et une zone périphérique inférieure.

Un tel détecteur permet de traiter de façon différenciée les différentes parties, centrale et périphériques, du champ de vision du conducteur en fonction des priorités qu'il convient de leur accorder.

Selon une forme de réalisation particulière de ce mode de réalisation de l'invention, cette zone centrale peut être de forme rectangulaire, tandis que les quatre zones périphériques peuvent être en forme de trapèzes réguliers, dont les côtés sont déterminés par les diagonales de la matrice rectangulaire définissant l'ensemble de capteurs élémentaires.

Par trapèze « régulier », on désigne un trapèze dont les côtés obliques sont d'égales longueurs. De telles formes rectangulaires ou trapézoïdales, permettent de réaliser une image selon une perspective « naturelle », c'est-à-dire selon une perspective cavalière avec un point de fuite au centre du champ de détection.

Selon un mode de réalisation particulier de l'invention, les capteurs élémentaires peuvent être des capteurs bolométriques reliés chacun thermiquement, mécaniquement et électriquement par au moins un bras à un substrat commun à l'ensemble de capteurs élémentaires.

De tels capteurs présentent des constantes de temps thermiques qui permettent de réaliser des images d'objets émettant des rayons infrarouges thermiques de manière suffisamment rapide et sensible.

Selon une forme de réalisation de ce mode de réalisation particulier de l'invention, les résistances thermiques des capteurs bolométriques composant des zones de détection distinctes peuvent être respectivement distinctes.

Différencier ainsi les résistances thermiques des capteurs élémentaires appartenant à des zones distinctes permet d'obtenir des constantes de temps thermiques distinctes, de façon à traiter différemment les zones constituant l'ensemble des capteurs formant le détecteur à infrarouge.

En pratique, les longueurs des bras des capteurs bolométriques composant des zones de détection distinctes peuvent être respectivement distinctes.

Alternativement, les largeurs des bras des capteurs bolométriques composant des zones de détection distinctes peuvent être respectivement distinctes.

Alternativement encore, les épaisseurs des bras des capteurs bolométriques composant des zones de détection distinctes peuvent être respectivement distinctes.

La différenciation de ces caractéristiques géométriques des bras des différents capteurs élémentaires permet de créer des zones distinctes dans l'ensemble des capteurs élémentaires.

Selon une autre forme de réalisation de ce mode de réalisation particulier de l'invention, les capacités calorifiques des capteurs bolométriques composant des zones de détection distinctes peuvent être respectivement distinctes.

Différencier les capacités calorifiques des capteurs élémentaires permet de créer des zones distinctes en termes de rapidité et de sensibilité dans l'ensemble de capteurs qui constituent le détecteur à infrarouge.

En pratique, les épaisseurs des capteurs bolométriques composant des zones de détection distinctes peuvent être respectivement distinctes.

De manière pratique encore, les matériaux constitutifs des capteurs bolométriques composant des zones de détection distinctes peuvent être respectivement distincts.

En pratique encore, la surface des zones sensibles des capteurs bolométriques composant des zones de détection distinctes peuvent être respectivement distinctes.

Cette disposition présente l'avantage, du point de vue du procédé de réalisation des capteurs, de mettre en oeuvre en tout point de la zone de détection le ou les mêmes matériaux avec la ou les mêmes épaisseurs. La surface des zones sensibles peut être modifiée par ajustement des dimensions latérales, ou en réservant des ouvertures, par perforation ou découpe, au sein les zones sensibles.

La différenciation de l'un de ces paramètres (épaisseur, matériau, surface) permet de définir des capteurs élémentaires aux performances différentes et partant, de créer des zones de détection distinctes.

Selon une forme de réalisation pratique, les constantes de temps thermiques peuvent être comprises entre 5 ms et 30 ms.

De telles constantes de temps thermiques sont compatibles avec les exigences d'imagerie en temps réel que nécessitent certaines applications de détecteur à infrarouges, en particulier dans le domaine automobile.

En pratique, cette matrice rectangulaire peut présenter un pas compris entre 15 $\mu$m et 51 $\mu$m.

Un tel pas est compatible avec la définition des images nécessaires à certaines applications, en particulier l'aide à la conduite.

Par ailleurs, la présente invention concerne un dispositif d'aide à la conduite de véhicule. Selon l'invention, il comprend une caméra infrarouge équipée d'un détecteur tel qu'exposé précédemment, la caméra étant électriquement reliée à un afficheur luminescent apte à reproduire la scène observée par ce détecteur.

Un tel dispositif permet donc d'afficher la scène observée par le détecteur et vue par le conducteur en affichant les objets avec une netteté satisfaisante au centre et sur les bords du champ de détection, tout en permettant au conducteur de suivre en temps réel le mouvement des objets latéraux.

## BREVE DESCRIPTION DES FIGURES

La manière dont l'invention peut être réalisée et les avantages qui en découlent ressortiront aussi de l'exemple de réalisation qui suit, donné à titre indicatif et non limitatif à l'appui des figures annexées, parmi lesquelles :

La figure 1 est une représentation schématique en vue de dessus d'un véhicule équipé d'une caméra infrarouge. Cette figure a déjà été décrite en relation avec l'état antérieur de la technique.
La figure 2 est une représentation schématique en section d'une caméra infrarouge. Cette figure a déjà été décrite en relation avec l'état antérieur de la technique.
La figure 3 représente un diagramme illustrant l'évolution du temps de transit sur un capteur élémentaire en fonction de l'angle de vue et de la vitesse du véhicule. Cette figure a déjà été décrite en relation avec l'état antérieur de la technique.
La figure 4a est une représentation schématique d'une scène de conduite telle que peut la voir un conducteur.
La figure 4b est une représentation schématique illustrant une caractéristique du détecteur objet de la présente invention.
La figure 5a est une représentation schématique en section d'un premier type de capteur élémentaire microbolométrique susceptible d'équiper un détecteur conforme à l'invention.
La figure 5b est une représentation schématique en section d'un deuxième type de capteur élémentaire microbolométrique susceptible d'équiper un détecteur conforme à l'invention.

## MODE DE REALISATION DE L'INVENTION

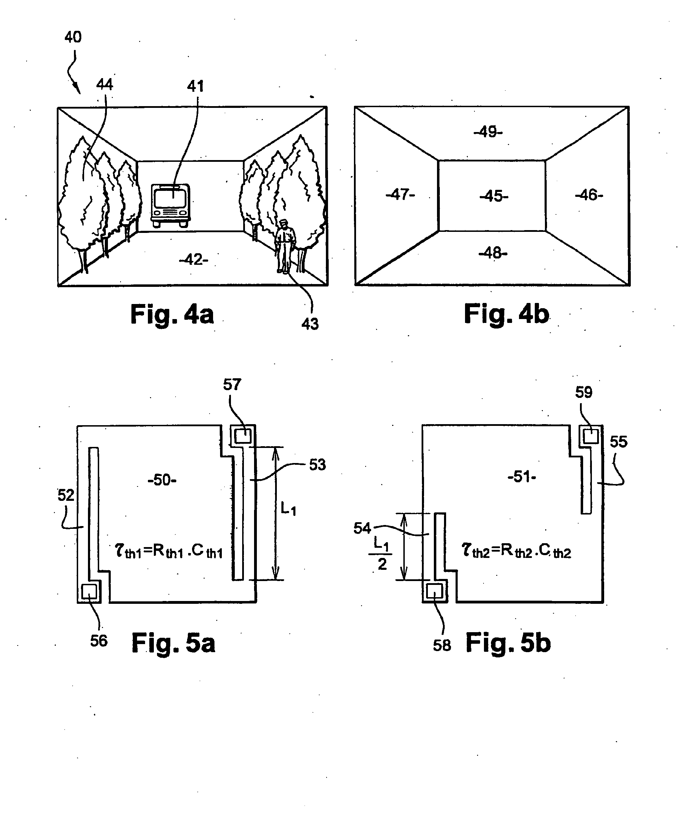

La figure 4a illustre donc une scène de conduite typique telle que peut en observer un conducteur de véhicule dans son champ de vision **40**. Cette scène est composée d'arbres **44,** d'un véhicule **41,** d'un piéton **43** et de la route **42** sur laquelle roule le véhicule du conducteur. Le bus **41,** situé nécessairement sur la route **42,** se trouve relativement éloigné du conducteur. Le bus **41** apparaît donc dans une zone centrale **45** du champ de vision **40** du conducteur ou du champ de détection de la caméra infrarouge embarquée. Au contraire, le piéton **43** se trouve sur le bord de la chaussée près du véhicule. Le piéton **43** apparaît donc dans une zone latérale **46** prés du bord droit du champ de vision **40**. Par ailleurs, les arbres **44** sont répartis tout le long du bord de la chaussée **42** et ils apparaissent donc dans les zones latérales **46** et **47** du champ de vision **40**. Les arbres **44** sont plus ou moins éloignés du véhicule, c'est-à-dire qu'ils se trouvent répartis dans les zone latérales **46** et **47** depuis les bords latéraux du champ de vision **40** jusqu'à la zone centrale **45**.

Comme exposé en relation avec les figures 1 et 2 décrites ci-dessus, les objets situés dans la zone centrale du champ de vision **40** du conducteur, comme le bus **41,** se déplacent dans le champ de vision **40** avec une vitesse relativement petite, tandis que les objets situés dans les zones latérales **46** et **47** prés des bords gauche et droit du champ de vision **40,** tel que le piéton **43,** se déplacent avec une grande vitesse relative dans le champ de vision **40**.

Or, conformément à l'invention, le détecteur de rayonnements infrarouges schématisé sur la figure 4b comprend un ensemble de capteurs élémentaires bolométriques comportant cinq zones de détection **45-49** distinctes et deux à deux juxtaposées. Parmi ces cinq zones, on distingue la zone centrale **45,** les zones périphériques gauche **47** et droite **46,** ainsi que les zones périphériques supérieure **49** et inférieure **48**.

Conformément à une forme de réalisation de l'invention, l'ensemble de capteurs élémentaires bolométriques formant le détecteur de rayonnement infrarouge présente la forme d'une matrice rectangulaire. En effet, le conducteur est habitué à l'affichage d'informations dans un cadre rectangulaire, car une telle forme est très répandue dans le domaine de l'affichage. De plus, la construction d'une matrice rectangulaire s'avère relativement simple, donc économique.

En outre, la zone centrale **45** du détecteur de l'invention est de forme rectangulaire, tandis que les quatre zones périphériques présentent la forme de trapèzes dont les cotés sont déterminés par les diagonales de la matrice rectangulaire du détecteur. Cette division particulière des zones de détection **45-49** permet de définir des cadrans qui correspondent à la vision naturelle du conducteur, c'est-à-dire à une vision selon une perspective cavalière avec un point de fuite au centre du champ de vision. Ainsi, la reconstitution et la compréhension de l'image issue du détecteur infrarouge par le conducteur est effectuée de manière naturelle, ce qui permet au conducteur de réagir le plus rapidement possible. La division du détecteur à infrarouge selon les cadrans **45-49** procure donc une aide à la conduite de véhicule particulièrement efficace.

Conformément à l'invention, les zones de détection distinctes **45-49** sont composées de capteurs élémentaires, en l'occurrence de nature bolométriques, qui possèdent des constantes de temps thermique différentes selon la zone de détection à laquelle ils appartiennent. Ainsi, un capteur élémentaire de la zone centrale **45** possède une constante de temps thermique différente de celle d'un capteur élémentaire appartenant à la zone périphérique gauche **47**.

En pratique, la constante de temps thermique caractéristique des capteurs élémentaires bolométriques occupant la zone centrale **45** est supérieure à la constante de temps thermique des zones périphériques latérales **45, 46** et **47.** De cette façon, les objets situés dans la zone centrale **45** du champ de vision **40,** comme le bus **41** sont détectés par des capteurs élémentaires présentant une sensibilité élevée et une rapidité relativement faible. Néanmoins, comme la vitesse de déplacement du bus **41** dans le champ de vision **40** est petite, son image produite par le détecteur infrarouge est suffisamment nette pour permettre son identification par le conducteur ou par un système de traitement automatique des images.

Quant aux objets situés dans les zones latérales, en particulier gauche **47** et droite **46,** prés des bords gauches et droits du champ de vision **40,** ils sont détectés par des capteurs élémentaires présentant une rapidité élevée et une sensibilité relativement faible mais suffisante, car les objets sont plus près du véhicule. Ces objets comme le piéton **43** ou les premiers arbres **44** sont ainsi détectés avec des constantes de temps thermique faibles, donc avec des temps de latence ou de transit courts, ce qui permet d'atténuer fortement, voire d'éliminer le flou dû à l'effet de filé subi par les détecteurs de l'art antérieur. Ainsi, malgré la grande vitesse de déplacement du piéton **43** par rapport au véhicule, l'image est affichée de manière suffisamment nette et rapide, pour permettre au conducteur du véhicule de le repérer et de suivre ces mouvements. On a ainsi une image dépourvue en grande partie de l'effet de filé.

Le détecteur de rayonnement infrarouge de l'invention peut donc avantageusement équiper une caméra infrarouge intégrée dans un dispositif d'aide à la conduite embarqué sur le véhicule, ce qui procure une aide à la conduite particulièrement efficace compte tenu de la rapidité d'imagerie des objets latéraux **44, 43** et de la sensibilité de l'imagerie des objets centraux **41.**

Par ailleurs, les zones périphériques supérieure **49** et inférieure **48** sont équipées de capteurs élémentaire bolométriques semblables à ceux qui composent les zones latérales **46** et **47.** On a donc privilégié la rapidité d'acquisition de l'image pour les zones de détection **48** et **49.**

Néanmoins, en tant que de besoin, on peut envisager d'équiper les zones périphériques supérieure **49** et inférieure **48** avec des capteurs élémentaires présentant une constante de temps thermique différente de la constante de temps thermique caractérisant les capteurs élémentaires des zones latérales **46** et **47** et centrales **45.** De même, on peut prévoir d'équiper les zones périphériques **48** et **49** avec des capteurs élémentaires présentant des constantes de temps thermique distinctes, tout comme on peut équiper les zones latérales **46** et **47** avec des capteurs élémentaires distincts. Cela permet par exemple d'acquérir des images de manière particulièrement rapide pour la zone latérale **46,** laquelle est la plus proche du véhicule dans les pays où l'on roule à droite, tandis que l'on équipe la zone latérale **47** de capteurs élémentaires présentant une sensibilité intermédiaire.

En pratique, les capteurs élémentaires qui composent le détecteur de rayonnement infrarouge sont des capteurs microbolométriques non refroidis, c'est-à-dire fonctionnant à température ambiante. De tels capteurs présentent en effet des performances appropriées en termes de sensibilité et de rapidité pour l'imagerie en temps réel d'une scène observée par un conducteur de véhicule et surtout ces capteurs présentent un coût et un encombrement appropriés pour le domaine automobile. Les figures 5a et 5b présentent de tels capteurs bolométriques susceptibles d'équiper différentes zones de détection du détecteur objet de l'invention.

Chacun des capteurs bolométriques **50, 51** formant le détecteur à infrarouge est relié thermiquement, mécaniquement et électriquement par au moins un bras **52-55** à un substrat commun par l'intermédiaire de plots **56-59.** Pour ces capteurs, la constante de temps thermique $\tau_{th}$ étant formée par le produit de la résistance thermique $R_{th}$ par la capacité calorifique $C_{th}$ d'un capteur élémentaire bolométrique, la présente invention propose de moduler l'un et/ou l'autre de ces deux paramètres pour définir les capteurs élémentaires qui doivent équiper les zones de détection distinctes.

Ainsi, conformément à la forme de réalisation illustrée par les figures 5a et 5b, on peut moduler la résistance thermique des capteurs bolométriques en jouant sur les longueurs des bras **52-55** supports des capteurs bolométriques **50, 51** de manière à définir deux types de capteurs élémentaires présentant deux constantes de temps thermiques distinctes.

C'est pourquoi les bras **52** et **53** du premier capteur **50** possèdent une longueur $L_1$, tandis que les bras **54** et **55** du deuxième capteur **51** possèdent une longueur $L_1/2$, c'est-à-dire la moitié de la longueur des bras du premier capteur. Par conséquent, la résistance thermique $R_{th2}$ du deuxième capteur **51** vaut la moitié de la résistance thermique $R_{th1}$ du premier capteur **50,** car la résistance thermique d'un capteur bolométrique est proportionnelle à la longueur de ses bras supports.

Le premier capteur **50** s'avère donc plus sensible et moins rapide que le deuxième capteur **51.** On peut donc constituer la zone centrale **45** du détecteur infrarouge avec des capteurs du premier type **50,** tandis que l'on compose les zones périphériques **46-49** avec des capteurs élémentaires du deuxième type **51.** On obtient ainsi un détecteur dont la zone centrale **45** est sensible et dont les zones périphériques **46-49** sont rapides pour acquérir les images d'objets situés dans le champ de vision **40** du conducteur.

La résistance thermique d'un capteur élémentaire dépend également de la largeur et de l'épaisseur de ces bras supports, si bien que l'on peu également envisager de jouer sur la largeur ou sur l'épaisseur des bras supports pour définir des capteurs bolométrique de constante de temps thermique distinctes.

De même, il est possible de moduler les capacités calorifiques des capteurs bolométriques pour composer des zones de détection distinctes, en jouant par exemple sur les épaisseurs ou sur la nature des matériaux qui les constituent.

De même, il est encore possible de moduler les capacités calorifiques des capteurs bolométriques pour composer des zones de détection distinctes, en ajustant la surface de la zone sensible de détection. On peut par exemple découper ou perforer le capteur pour diminuer cette surface.

Pour réaliser des images en temps réel procurant une aide à la conduite efficace, il est souhaitable que les constantes de temps thermique de ces capteurs bolométriques soient comprises entre 5 ms et 30 ms. Avantageusement, les capteurs bolométriques qui composent la zone de détection centrale **45** peuvent présenter une constante de temps thermique de 30 ms, tandis que les capteurs bolométriques composant les zones périphériques **46-49** peuvent présenter une constante de temps thermique de 5 ms.

Par ailleurs, dans le cadre de l'exemple décrit en relation avec les figures, les capteurs bolométriques composant l'ensemble formant la matrice rectangulaire du détecteur à infrarouges possèdent un pas de 25 $\mu$m, ce qui permet de produire des images avec une définition suffisamment fine pour procurer au conducteur une aide à la conduite efficace.

D'autres formes de réalisation de l'invention sont possibles sans pour autant sortir du cadre de cette invention. On pourrait par exemple remplacer les capteurs bolométriques par des capteurs pyroélectriques ou ferroélectriques.

## Revendications

**1.** Détecteur de rayonnement infrarouge comprenant un ensemble (5) de capteurs élémentaires (50, 51) aptes à détecter ledit rayonnement, *caractérisé* **en ce que** ledit ensemble comporte au moins deux zones de détection (45-49) distinctes :

■ une première zone de détection (45) composée de capteurs élémentaires (50) présentant une première constante de temps thermique $\tau_{th1}$, et occupant le centre dudit ensemble (5),
■ et une seconde zone de détection (46-49) composée de capteurs élémentaires (51) présentant une seconde constante de temps thermique $\tau_{th2}$ inférieure à ladite première constante de temps thermique $\tau_{th1}$, et occupant la périphérie dudit ensemble (5),

**2.** Détecteur de rayonnement infrarouge selon la revendication 1, *caractérisé* **en ce que** l'ensemble (5) est en forme de matrice rectangulaire.

**3.** Détecteur de rayonnement infrarouge selon la revendication 2, *caractérisé* **en ce qu'**il comporte cinq zones de détection (45-49) distinctes et deux à deux juxtaposées, à savoir une zone centrale (45), une zone périphérique gauche (47), une zone périphérique droite (46), une zone périphérique supérieure (49) et une zone périphérique inférieure (48).

**4.** Détecteur de rayonnement infrarouge selon la revendication 3, *caractérisé* **en ce que** la zone centrale (45) est de forme rectangulaire, tandis que les quatre zones périphériques (46-49) sont en forme de trapèzes réguliers dont les côtés sont déterminés par les diagonales de ladite matrice rectangulaire.

**5.** Détecteur de rayonnement infrarouge selon l'une des revendications précédentes, *caractérisé* **en ce que** les capteurs élémentaires sont des capteurs bolométriques (50, 51) reliés chacun thermiquement, mécaniquement et électriquement par au moins un bras (52-53, 54-55) à un substrat commun audit ensemble (5).

**6.** Détecteur de rayonnement infrarouge selon la revendication 5, *caractérisé* **en ce que** les résistances thermiques ($R_{th1}$, $R_{th2}$) des capteurs bolométriques (50, 51) composant des zones de détection distinctes sont respectivement distinctes.

**7.** Détecteur de rayonnement infrarouge selon la revendication 6, *caractérisé* **en ce que** les longueurs ($L_1$, $L_1/2$) des bras (52-53, 54-55) des capteurs bolométriques (50, 51) composant des zones de détection distinctes sont respectivement distinctes.

**8.** Détecteur de rayonnement infrarouge selon la revendication 6, *caractérisé* **en ce que** les largeurs des bras (52-53, 54-55) des capteurs bolométriques (50, 51) composant des zones de détection distinctes sont respectivement distinctes.

**9.** Détecteur de rayonnement infrarouge selon la revendication 6, *caractérisé* **en ce que** les épaisseurs des capteurs bolométriques (50, 51) composant des zones de détection distinctes sont respectivement distinctes.

10. Détecteur de rayonnement infrarouge selon la revendication 5, *caractérisé* **en ce que** les capacités calorifiques ($C_{th1}$, $C_{th2}$) des capteurs bolométriques (50, 51) composant des zones de détection distinctes sont respectivement distinctes.

11. Détecteur de rayonnement infrarouge selon la revendication 10, *caractérisé* **en ce que** les épaisseurs des capteurs bolométriques (50, 51) composant des zones de détection distinctes sont respectivement distinctes.

12. Détecteur de rayonnement infrarouge selon la revendication 11, *caractérisé* **en ce que** les matériaux constitutifs des capteurs bolométriques (50, 51) composant des zones de détection distinctes sont respectivement distincts.

13. Détecteur de rayonnement infrarouge selon la revendication 10, *caractérisé* **en ce que** les surfaces des capteurs bolométriques (50, 51) composant des zones de détection distinctes sont respectivement distinctes.

14. Détecteur de rayonnement infrarouge selon l'une des revendications précédentes, *caractérisé* **en ce que** lesdites constantes de temps thermique ($\tau_{th1}$, $\tau_{th2}$) sont comprises entre 5 ms et 30 ms.

15. Détecteur de rayonnement infrarouge selon l'une des revendications 2 à 14, *caractérisé* **en ce que** la matrice rectangulaire présente un pas compris entre 15 $\mu$m et 51 $\mu$m.

16. Dispositif d'aide à la conduite de véhicule (1), *caractérisé* **en ce qu'**il comprend une caméra infrarouge (3) équipée d'un détecteur selon l'une des revendications 1 à 15, électriquement reliée à un afficheur apte à reproduire la scène observée par ledit détecteur.

**Claims**

1. An infrared radiation detector comprising an assembly (5) of elementary sensors (50, 51) capable of detecting said radiation, *characterised* **in that** said assembly comprises at least two separate detection areas (45-49):

   ■ a first detection area (45) comprising elementary sensors (50) having a first thermal time constant $\tau_{th1}$, and which occupy the centre of said assembly (5),
   ■ and a second detection area (46-49) comprising elementary sensors (51) having a second thermal time constant $\tau_{th2}$ which is less than said first thermal time constant $\tau_{th1}$ and which occupy the periphery of said assembly.

2. An infrared radiation detector as claimed in claim 1, *characterised* **in that** assembly (5) has a rectangular array shape.

3. An infrared radiation detector as claimed in claim 2, *characterised* **in that** it comprises five separate detection areas (45-49) juxtaposed two by two, namely a central area (45), a left-hand peripheral area (47), a right-hand peripheral area (46), an upper peripheral area (49) and a lower peripheral area (48).

4. An infrared radiation detector as claimed in claim 3, *characterised* **in that** central area (45) has a rectangular shape whereas the four peripheral areas (46-49) have a regular trapezoid shape, the sides of the trapezoids being determined by the diagonals of said rectangular array.

5. An infrared radiation detector as claimed in any of the above claims, *characterised* **in that** the elementary sensors are bolometric sensors (50, 51) each thermally, mechanically and electrically connected by at least one arm (52-53, 54-55) to a substrate which is common to said assembly (5).

6. An infrared radiation detector as claimed in claim 5, *characterised* **in that** the thermal resistances ($R_{th1}$, $R_{th2}$) of the bolometric sensors (50, 51) which constitute the separate detection areas are respectively different.

7. An infrared radiation detector as claimed in claim 6, *characterised* **in that** the lengths ($L_1$, $L_1/2$) of arms (52-53, 54-55) of bolometric sensors (50, 51) which constitute the separate detection areas are respectively different.

8. An infrared radiation detector as claimed in claim 6, *characterised* **in that** the widths of arms (52-53, 54-55) of bolometric sensors (50, 51) which constitute the separate detection areas are respectively different.

9. An infrared radiation detector as claimed in claim 6, *characterised* **in that** the thicknesses of bolometric sensors (50, 51) which constitute the separate detection areas are respectively different.

10. An infrared radiation detector as claimed in claim 5, *characterised* **in that** the calorific capacities ($C_{th1}$, $C_{th2}$) of bolometric sensors (50, 51) which constitute the separate detection areas are respectively different.

11. An infrared radiation detector as claimed in claim 10, *characterised* **in that** the thicknesses of bolometric sensors (50, 51) which constitute the separate detection areas are respectively different.

12. An infrared radiation detector as claimed in claim 11, *characterised* **in that** the materials of which bolometric sensors (50, 51) which constitute the separate detection areas are made are respectively different.

13. An infrared radiation detector as claimed in claim 10, *characterised* **in that** the surface areas of bolometric sensors (50, 51) which constitute the separate detection areas are respectively different.

14. An infrared radiation detector as claimed in any of the above claims, *characterised* **in that** said thermal time constants ($\tau_{th1}$, $\tau_{th2}$) range from 5 ms to 30 ms.

15. An infrared radiation detector as claimed in any of claims 2 to 14, *characterised* **in that** the rectangular array has a pitch of 15 $\mu$m to 51 $\mu$m.

16. A vehicle driving-assistance device (1), *characterised* **in that** it comprises an infrared camera (3) equipped with a detector as claimed in any of claims 1 to 15 and being electrically connected to a display capable of reproducing the scene observed by said detector.

**Patentansprüche**

1. Infrarotstrahlungsdetektor mit einer Anordnung (5) aus Elementarsensoren (50, 51), die geeignet sind, die Strahlung zu erfassen, **dadurch gekennzeichnet, dass** die Anordnung mindestens zwei einzelne Detektionsbereiche (45-49) aufweist:

   - einen ersten Detektionsbereich (45), der durch Elementarsensoren (50) mit einer ersten thermischen Zeitkonstante $\tau_{th1}$ gebildet ist und sich in der Mitte der Anordnung (5) befindet, und
   - einen zweiten Detektionsbereich (46-49), der durch Elementarsensoren (51) mit einer zweiten thermischen Zeitkonstante $\tau_{th2}$ gebildet ist, welche niedriger ist als die erste thermische Zeitkonstante $\tau_{th1}$, und der sich in dem Randbereich der Anordnung (5) befindet.

2. Infrarotstrahlungsdetektor nach Anspruch 1, **dadurch gekennzeichnet, dass** die Anordnung (5) als rechteckige Matrix ausgestaltet ist.

3. Infrarotstrahlungsdetektor nach Anspruch 2, **dadurch gekennzeichnet, dass** er fünf einzelne, paarweise aneinander liegende Detektionsbereiche (45-49) aufweist, und zwar einen mittigen Bereich (45), einen linken Randbereich (47), einen rechten Randbereich (46), einen oberen Randbereich (49) und einen unteren Randbereich (48).

4. Infrarotstrahlungsdetektor nach Anspruch 3, **dadurch gekennzeichnet, dass** der mittige Bereich (45) rechteckig ausgebildet ist, während die vier Randbereiche (46-49) jeweils die Form eines regelmäßigen Trapezes aufweisen, dessen Schenkel durch die Diagonalen der rechteckigen Matrix bestimmt sind.

5. Infrarotstrahlungsdetektor nach einem der vorhergehenden Ansprüche, **dadurch gekennzeichnet, dass** es sich bei den Elementarsensoren um bolometrische Sensoren (50, 51) handelt, die jeweils thermisch, mechanisch und elektrisch durch mindestens einen Arm (52-53, 54-55) mit einem der Anordnung (5) gemeinsamen Substrat verbunden sind.

6. Infrarotstrahlungsdetektor nach Anspruch 5, **dadurch gekennzeichnet, dass** die thermischen Widerstände ($R_{th1}$,

$R_{th2}$) der einzelne Detektionsbereiche bildenden bolometrischen Sensoren (50, 51) jeweils unterschiedlich sind.

7. Infrarotstrahlungsdetektor nach Anspruch 6, **dadurch gekennzeichnet, dass** die Längen ($L_1$, $L_1/2$) der Arme (52-53, 54-55) der einzelne Detektionsbereiche bildenden bolometrischen Sensoren (50, 51) jeweils unterschiedlich sind.

8. Infrarotstrahlungsdetektor nach Anspruch 6, **dadurch gekennzeichnet, dass** die Breiten der Arme (52-53, 54-55) der einzelne Detektionsbereiche bildenden bolometrischen Sensoren (50, 51) jeweils unterschiedlich sind.

9. Infrarotstrahlungsdetektor nach Anspruch 6, **dadurch gekennzeichnet, dass** die Dicken der einzelne Detektionsbereiche bildenden bolometrischen Sensoren (50, 51) jeweils unterschiedlich sind.

10. Infrarotstrahlungsdetektor nach Anspruch 5, **dadurch gekennzeichnet, dass** die Wärmekapazitäten ($C_{th1}$, $C_{th2}$) der einzelne Detektionsbereiche bildenden bolometrischen Sensoren (50, 51) jeweils unterschiedlich sind.

11. Infrarotstrahlungsdetektor nach Anspruch 10, **dadurch gekennzeichnet, dass** die Dicken der einzelne Detektionsbereiche bildenden bolometrischen Sensoren (50, 51) jeweils unterschiedlich sind.

12. Infrarotstrahlungsdetektor nach Anspruch 11, **dadurch gekennzeichnet, dass** die Materialien, aus denen die einzelne Detektionsbereiche bildenden bolometrischen Sensoren (50, 51) bestehen, jeweils unterschiedlich sind.

13. Infrarotstrahlungsdetektor nach Anspruch 10, **dadurch gekennzeichnet, dass** die Oberflächen der einzelne Detektionsbereiche bildenden bolometrischen Sensoren (50, 51) jeweils unterschiedlich sind.

14. Infrarotstrahlungsdetektor nach einem der vorhergehenden Ansprüche, **dadurch gekennzeichnet, dass** die thermischen Zeitkonstanten ($\tau_{th1}$, $\tau_{th2}$) zwischen 5 ms und 30 ms liegen.

15. Infrarotstrahlungsdetektor nach einem der Ansprüche 2 bis 14, **dadurch gekennzeichnet, dass** die rechteckige Matrix eine zwischen 15 $\mu$m und 51 $\mu$m liegende Schrittweite aufweist.

16. Vorrichtung zur Unterstützung des Fahrens eines Fahrzeugs (1), **dadurch gekennzeichnet, dass** sie eine Infrarotkamera (3) umfasst, die mit einem Detektor nach einem der Ansprüche 1 bis 15 ausgestattet ist und elektrisch mit einer Anzeigeeinheit verbunden ist, welche geeignet ist, das von dem Detektor beobachtete Bild wiederzugeben.

## Fig. 1

## Fig. 2

## Fig. 3

**Fig. 4a**

**Fig. 4b**

$$\tau_{th1} = R_{th1} \cdot C_{th1}$$

**Fig. 5a**

$$\tau_{th2} = R_{th2} \cdot C_{th2}$$

**Fig. 5b**